# EUROPEAN PATENT APPLICATION

(11) **EP 1 371 585 A1**
(43) Date of publication of application: **17.12.2003**
(21) Application number: 03013069.4
(22) Date of filing: 10.06.2003
(51) Int. Cl.: B65G 59/02

(54) **Pickup device for stacks of blanks**

(30) Priority: 11.06.2002 IT BO20020367
(71) Applicant: G.D Societa' Per Azioni, 40133 Bologna (IT)
(72) Inventor: Spatafora, Mario, 40100 Bologna (IT); Stagni, Alberto, 40018 S. Pietro In Casale (IT)
(74) Representative: Jorio, Paolo

(57) **Abstract**

A pickup device (1) for stacks (2) of blanks arranged in at least one layer (4a) on a substantially horizontal separating sheet (5), wherein a fork (8), movable in a given pickup direction (9) to and from the separating sheet (5) to successively pick up the stacks (2) by sliding in contact with the separating sheet (5), has a skid (20) hinged to a free end of the fork (8); the skid (20) sliding in contact with the separating sheet (5), and oscillating, with respect to the fork (8), about a substantially horizontal axis (21) crosswise to the pickup direction (9).

## Description

The present invention relates to a pickup device for stacks of blanks arranged in a group comprising a succession of superimposed layers, each separated from each adjacent layer by a separating sheet.

Known pickup devices normally comprise a fork, which is fitted to a carriage movable in a pickup direction, and is connected to the carriage by an articulated actuating device for swinging the fork in a vertical plane parallel to the pickup direction. The fork is normally moved towards the group of stacks of blanks with its free end facing downwards, is simultaneously lowered onto the separating sheet beneath the top layer in the group, and is then slid, in the pickup direction and in contact with the separating sheet, underneath the stack to be picked up.

Unfortunately, the stacks in the layers do not normally all comprise exactly the same number of blanks, and therefore differ in height, so that the separating sheet comprises a number of flat portions, each contacting the top blank in a respective stack directly underneath, and a number of sloping portions connecting each flat portion to the surrounding flat portions. There is always a danger, therefore, that the fork, as it slides in contact with the separating sheet, encounters and punctures an upward sloping portion crosswise to the pickup direction, thus removing the separating sheet as well and causing all the stacks resting on it to fall off.

It is an object of the present invention to provide a pickup device designed to eliminate the aforementioned drawback.

According to the present invention, there is provided a pickup device for stacks of blanks, as claimed in Claim 1 and preferably in any one of the following Claims depending directly or indirectly on Claim 1.

A non-limiting embodiment of the present invention will be described by way of example with reference to the accompanying drawings, in which:
Figure 1 shows a schematic side view of a preferred embodiment of the pickup device according to the present invention;
Figure 2 shows a larger-scale view in perspective of a detail in Figure 1;
Figures 3 to 5 show larger-scale side views of a Figure 1 detail in three different operating positions.

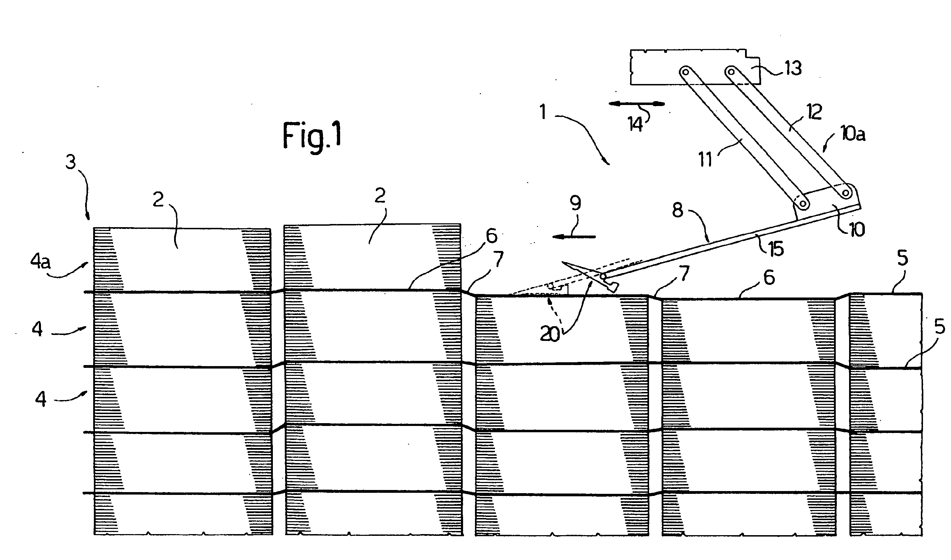

Number 1 in Figure 1 indicates as a whole a pickup device for successively picking up stacks 2 of blanks off a group 3 of stacks 2 arranged in a number of superimposed, substantially vertical layers 4, each separated from the underlying layer 4 by a separating sheet 5, normally of cardboard or similar.

The stacks 2 directly beneath each separating sheet 5 do not all comprise exactly the same number of blanks, and therefore differ in height, so that each separating sheet 5 comprises a number of flat portions 6, each contacting the top blank in a respective stack 2 directly underneath, and a number of sloping portions 7 (sloping at an exaggerated angle in Figure 1 for the sake of clarity) connecting each flat portion 6 to the surrounding flat portions 6.

Pickup device 1 is located over a top layer 4a in group 3, and comprises a fork 8 projecting, in a pickup direction 9 and by a length similar to the length of a stack 2 measured in direction 9, from one end of a connecting rod 10 of an articulated actuating device 10a moving in a plane parallel to direction 9 and comprising, in addition to connecting rod 10, two cranks 11 and 12 hinged, at one end, to opposite ends of connecting rod 10, and, at the other end, to a powered carriage 13 moved in a direction 14 parallel to direction 9 by a logic unit not shown. Carriage 13 houses a known drive assembly (not shown), which, under the control of said logic unit (not shown), activates cranks 11 and 12 independently to move fork 8 and possibly adjust its inclination with respect to a horizontal plane.

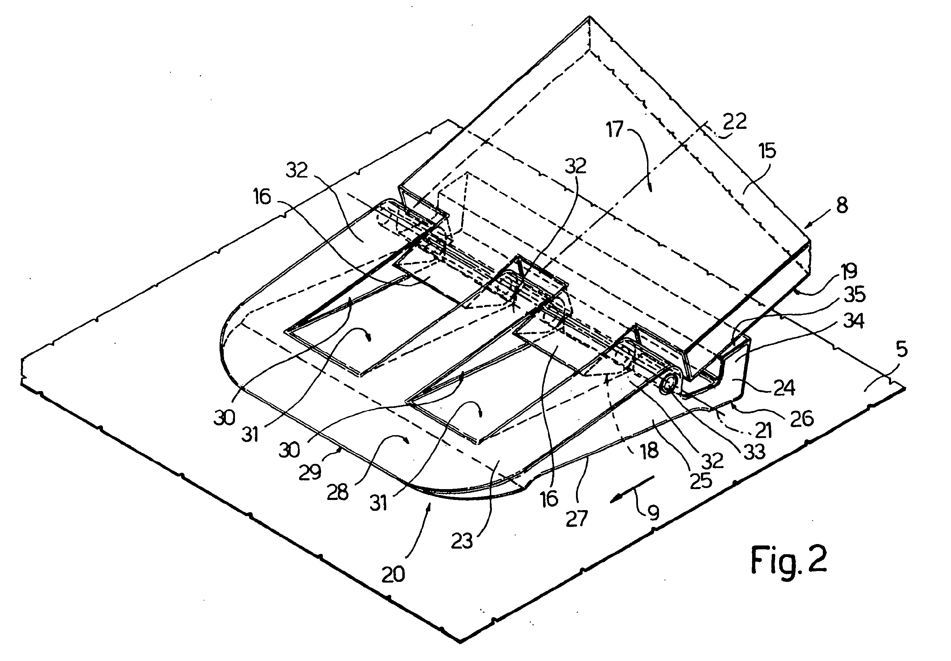

As shown in Figure 2, fork 8 is defined by a plate or beam 15, an end portion of which is hinged to the free ends of cranks 11 and 12, and from the free end of which project axially outwards substantially triangular axial appendixes 16 defined at the top by a surface coplanar with a top surface 17 of beam 15, and defined at the bottom by an end surface 18 sloping with respect to a bottom surface 19 of beam 15 and forming an angle A with top surface 17.

A rocking skid 20 is hinged to appendixes 16, rocks with respect to beam 15 about an intermediate horizontal axis 21 crosswise to a longitudinal axis 22 of beam 15, and comprises two arms 23 and 24 on opposite sides of axis 21. Rocking skid 20 comprises a base plate 25 located below axis 21 and defined at the bottom by a flat surface 26 common to arms 23 and 24 and having an intermediate transverse recess 27 extending parallel to axis 21. Arm 23, located to the front of axis 21 in pickup direction 9, is substantially triangular in section, and is defined at the top by a surface 28, which forms, with surface 26, an angle B smaller than angle A, and intersects surface 26 along a front edge 29, parallel to axis 21, of rocking skid 20. Through surface 28 are formed longitudinal grooves 30, each of which houses a respective appendix 16, is defined by a bottom surface 31 parallel to surface 26, and defines, with each adjacent groove 30, a longitudinal rib 32 connected, together with the other ribs 32, to appendixes 16 by a pin 33 coaxial with axis 21.

Arm 24 is located beneath an end portion of beam 15, is heavier than arm 23, and comprises, at the rear end, a transverse rib 34, which extends upwards from the rear end of base plate 25, is parallel to axis 21, and is defined at the top end by a sloping surface 35 parallel to surface 28.

Rib 34 constitutes a stop member for limiting oscillation of rocking skid 20, and is of such a height that, when surface 35 contacts bottom surface 19 of beam 15, surface 28 of arm 23 is coplanar with top surface 17 of beam 15. Appendixes 16 as a whole define a further stop member for limiting oscillation of rocking skid 20 about axis 21 due to the greater weight of arm 24 with respect to arm 23, and, in the absence of other forces on rocking skid 20, arrest rocking skid 20 with end surfaces 18 of appendixes 16 contacting bottom surfaces 31 of grooves 30.

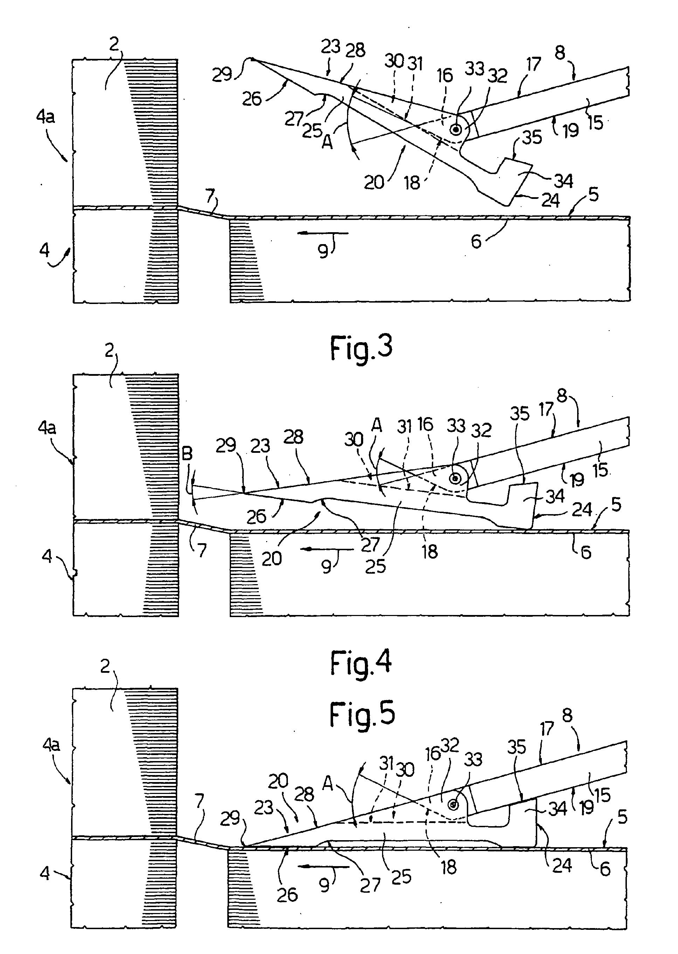

In actual use, as shown in Figures 3 to 5, rocking skid 20 enables fork 8 to slide smoothly along separating sheet 5 and overcome any differences in level - actually relatively small - along the top surface of separating sheet 5.

## Claims

1. A pickup device for stacks of blanks arranged in at least one layer (4a) on a substantially horizontal separating sheet (5), the pickup device (1) comprising a fork (8) movable to and from said layer (4a); actuating means (10a, 13) for moving said fork (8) onto said separating sheet (5) into a position facing a said stack (2) for pickup, and for then sliding the fork (8), in a given pickup direction (9) and in contact with said separating sheet (5), beneath said stack (2) for pickup; and being **characterized in that** said fork (8) comprises a skid (20) hinged to a free end of the fork (8); said skid (20) sliding in contact with said separating sheet (5), and oscillating, with respect to said fork (8), about a substantially horizontal axis (21) crosswise to said pickup direction (9).

2. A device as claimed in Claim 1, wherein said fork (8) comprises a plate member (15) supporting in hinged manner said skid (20), which projects frontwards of the plate member (15) in said pickup direction (9).

3. A device as claimed in Claim 2, wherein said skid (20) is a rocking skid (20) hinged about said axis (21) and comprising a first arm (23) projecting frontwards, in said pickup direction (9), with respect to said plate member (15), and a second arm (24) located beneath said plate member (15).

4. A device as claimed in Claim 3, wherein first and second stop means (34, 16) are provided to limit oscillation of said skid (20), with respect to said fork (8), between a first position wherein a top surface (28) of said first arm (23) slopes downwards, and a second position wherein said first arm (23) slopes upwards with respect to said plate member (15).

5. A device as claimed in Claim 4, wherein, when said skid (20) is in said first position, the top surface (28) of said first arm (23) is coplanar with a top surface (17) of said plate member (15).

6. A device as claimed in Claim 4 or 5, wherein said second arm (24) is heavier than said first arm (23) to keep said skid (20) normally in said second position.

7. A device as claimed in any one of Claims 4 to 6, wherein said plate member (15) comprises axial appendixes (16) crosswise to said axis (21) and through which the axis (21) extends; said axial appendixes (16) defining said second stop means (16) and having respective surfaces (18) resting on said skid (20) when the skid (20) is in said second position.

8. A device as claimed in any one of Claims 4 to 7, wherein said first stop means (34) are carried by said second arm (24), and cooperate with a bottom surface (19) of said plate member (15).

9. A device as claimed in Claim 8, wherein said second arm (24) has a transverse end rib (34) facing upwards and defined, at a top end, by an end surface (35), which contacts said bottom surface (19) of said plate member (15) when said skid (20) is in said first position.
